# EUROPEAN PATENT SPECIFICATION

(11) **EP 1 008 760 B1**
(45) Date of publication and mention of the grant of the patent: **17.09.2003**
(21) Application number: 98310113.0
(22) Date of filing: 10.12.1998
(51) Int. Cl.: F04D 29/26, F16D 3/00

(54) **Transverse fan drive shaft coupling structure**
Aufbau einer Antriebswellenkupplung für einen Querstromlüfter
Structure d'accouplement d'un arbre d'entraînement pour ventilateur à courant transversal

(43) Date of publication of application: 14.06.2000
(73) Proprietor: CARRIER CORPORATION, Syracuse New York 13221 (US)
(72) Inventor: Francesco, Antonione, 20146 Milano (IT); Crippa, Giacomo, 20059 Vimercata (MI) (IT)
(74) Representative: Leckey, David Herbert

(56) References cited:
- WO-A-97/16650
- DE-A- 4 327 461
- DE-B- 1 286 348
- US-A- 3 897 162
- US-A- 4 411 634

## Description

This invention relates generally to transverse fans and more particularly to drive unit assemblies for such fans.

The typical transverse fan is a long wheel fan having a substantial length to diameter ratio in the neighborhood of four to eight. Such long length fans are used in a variety of air flow applications including HVAC devices where they often extend along the entire length of a heat exchanger within the HVAC device. These fans are preferably rotatably mounted at one end within a fixed bearing assembly while being rotatably driven at the other end by an appropriately sized electric motor.

It is often difficult to align the axis of the drive shaft of the electric motor with respect to the axis of rotation of the opposite end of the transverse fan as defined by the rotatable bearing assembly. Any resulting slight misalignment of these axes may cause distortion of the transverse fan. Such a misalignment might also cause the transverse fan to wobble when being rotatably driven by the electric motor.

### Summary of the Invention

The present invention provides a drive motor coupling to a transverse fan that absorbs any distortion caused by slight misalignment of the axis of the drive motor with respect to the axis of rotation of the opposing end of the transverse fan. The drive coupling preferably includes a central sleeve portion which engages the shaft of the drive motor. A thin flexible diaphragm or web portion surrounds the central sleeve portion and extends radially outwardly to a relatively thick outer peripheral portion The outer peripheral portion preferably includes a flexible locking configuration which engages the inner periphery of a receiving cavity at the one end of the transverse fan. The drive coupling is preferably manufactured as a single molded unit of thermoplastic elastomer material.

### Brief Description of the Drawings

Other objects and advantages of the invention will be apparent from the following description in conjunction with the accompanying drawings, in which:
Figure 1 illustrates a transverse fan with drive coupling to an electric motor ;
Figure 2 is an exploded view of the drive coupling and drive end of the transverse fan of Figure 1:
Figures 3, 4 and 5 are partial views of the end of the transverse fan illustrating how the drive coupling is rotated into a locked position within the end of the transverse fan;
Figure 6 illustrates the drive coupling in locked position with respect to the transverse fan;
Figure 7 is a front view of the drive coupling in locked position with respect to the transverse fan.
Figure 8 is a rear view of the drive coupling in locked position with respect to the transverse fan ;
Figure 9 is a cross sectional view of the drive coupling in lock position with respect to the transverse fan;

### Description of the Preferred Embodiment

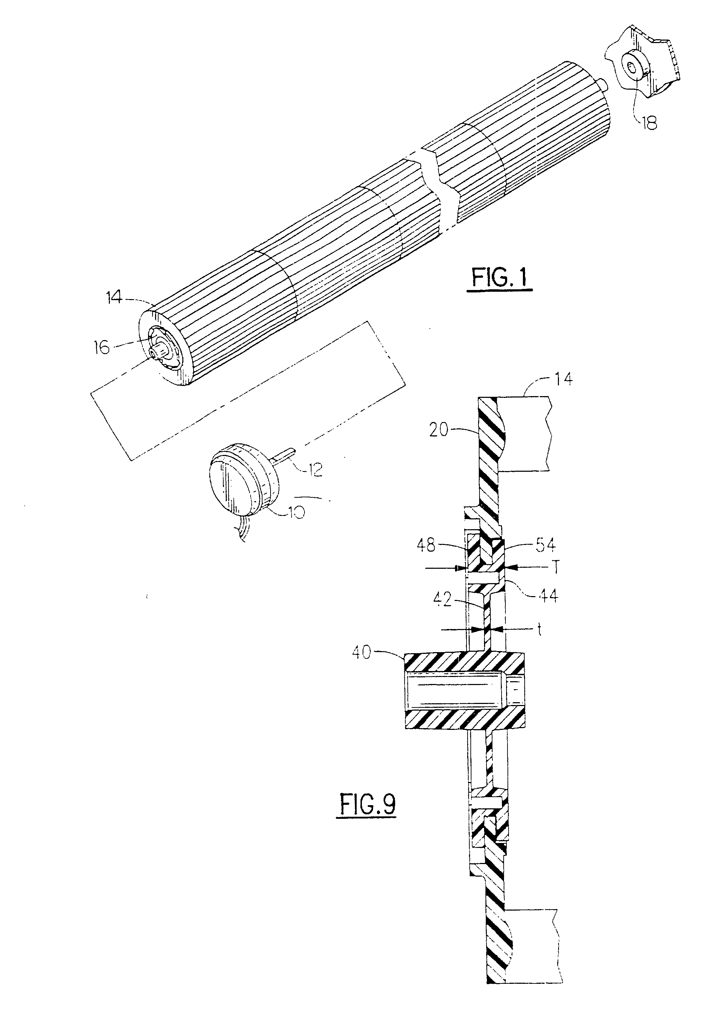

Referring to Figure 1, an electric drive motor 10 having a drive shaft 12 is illustrated relative to a transverse fan assembly 14 having a drive coupling or drive hub 16 associated therewith. It is to be appreciated that the drive hub is mounted on the shaft 12 of the electric motor 10 so as to thereby allow the transverse fan assembly 14 to rotate about the axis of the drive shaft 12. The transverse fan assembly also rotates about an axis defined by a bearing assembly 18 at the opposing end of the transverse fan assembly.

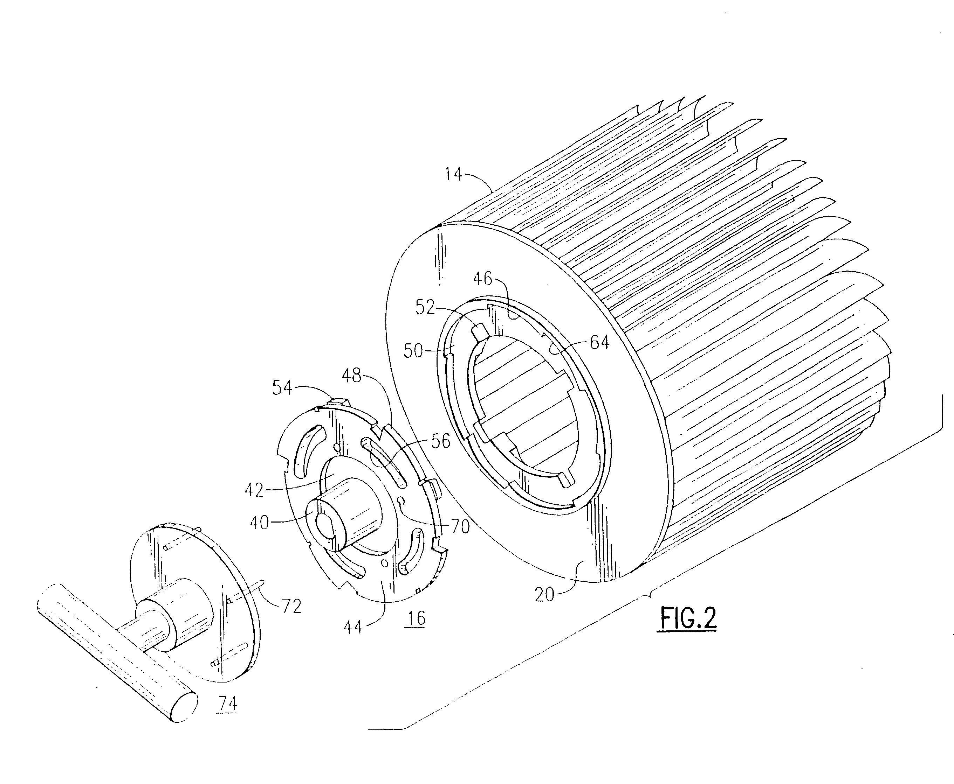

Referring to Figure 2, the drive hub 16 is illustrated relative to a drive end plate 20 of the transverse fan assembly 14. The drive end plate 20 is preferably part of the entire transverse fan assembly 14 and is molded from a rigid material such as styrene acrylonitrile with glass filler. The resultingly molded drive end plate is quite rigid relative to the drive hub 16.

The drive hub 16 is seen to comprise a sleeve 40, a diaphragm 42 and a locking structure 44. The sleeve 40 attaches the drive hub to the shaft 12. The locking structure 44 attaches the drive hub to the drive end plate 20. The sleeve 40, diaphragm 42 and locking structure 44 are preferably all part of a single molded drive hub. Such a drive hub is preferably molded from a thermoplastic elastomer material that is fatigue resistant, heat resistant, creep resistant, ozone resistant, and ultraviolet resistant. A thermoplastic elastomer material having such properties is HYTREL® 5526, available from the DuPont company. A drive hub fabricated from this material is both flexible and resilient to repeated deformation so as not to fatigue over the life of the transverse fan which is typically in the range of ten to fifteen years.

The drive hub 16 preferably inserts into an opening or cavity 22 within the drive end plate 20. The opening or cavity is defined by a peripheral contour that includes contoured recesses such as 46 that initially receive locking elements such as 48 projecting from the locking structure 44. The locking elements are preferably curved lobes on the locking structure 44. The opening or cavity in the drive end plate 20 is furthermore defined by a back section 50 having cutouts such as 52. The cutouts receive locking tabs such as 54 on the locking structure. The locking tabs 54 rotate into position behind the back side of the section 50 once the drive hub is inserted and rotated within the opening in the drive end plate.

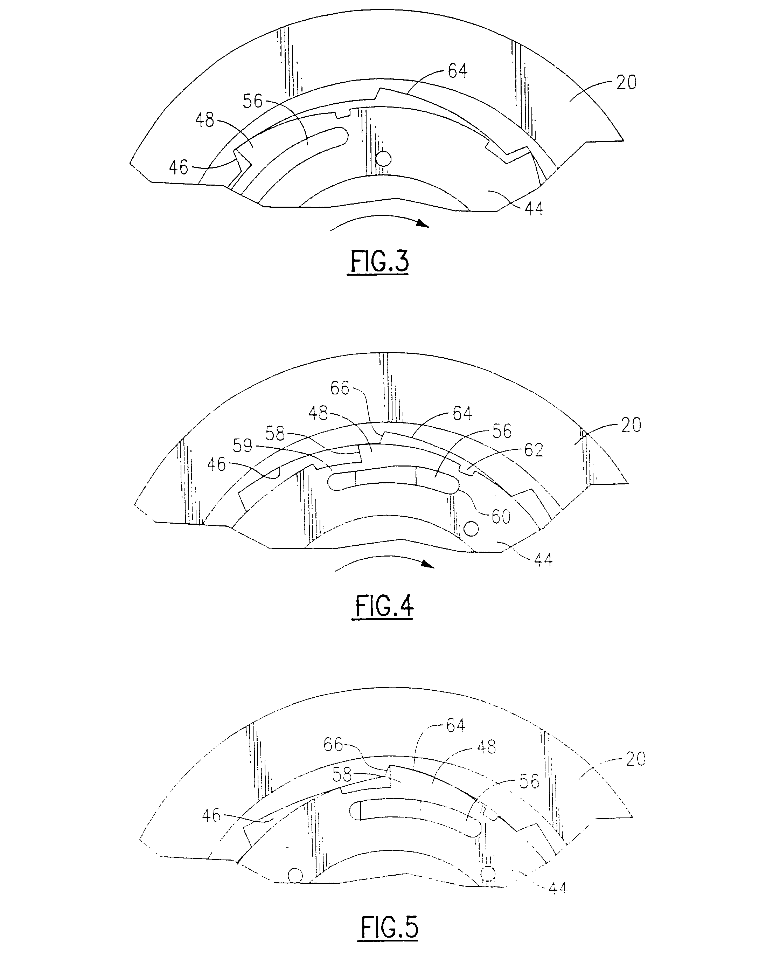

Referring to Figure 3, the locking element 48 of the drive hub is seen to engage the recess 46 within the drive end plate 20. The curvature of the recess 46 is preferably such as to only allow a portion of the locking element to contact the recess. This is preferably accomplished by requiring that the recess 46 have a slightly greater radius of curvature than that of the locking element 48. Following initial engagement of the locking element 48 with the recess 46, the drive hub is rotated clockwise as indicated by the arrow in Figure 3. The highest portion of the locking element 48 travels along the downward sloping curvature of the recess 46 as illustrated in Figure 4. As shown in Figure 4, a slotted hole 56 in the locking structure 44 deforms downwardly toward the center of the hub assembly. This deformation is caused by the locking element 48 moving downwardly toward the center of the hub as it moves along the curvature of the recess 46. The slotted hole 56 preferably begins substantially upstream of the leading edge 58 of the locking element 48 so as to thereby define a thin flexible link 59 between the upwardly extending portion of the locking element beginning with the edge 58 and the main body of the locking structure 44. As can be appreciated, the thin flexible link 59 elongates somewhat when the locking element moves downwardly. An opposing end 60 of the slotted hole 56 is preferably located beneath a notch 62 in the locking structure 44. The location of the end 60 beneath the notch 62 defines the pivot point of the locking element 48 as it pivots downwardly when moving along the downwardly sloping curvature of the recess 46. The locking element 48 continues to pivot downwardly as the drive hub rotates clockwise until it reaches the end of the recess 46. As shown in Figure 5, the locking element 48 ultimately snaps into a locking recess 64 within the drive end plate 20 when it reaches the end of the recess 46. An inclined edge 66 of the locking recess 64 preferably begins at an angle with respect to the end of the recess 46. This inclined recess edge allows the highest point of the leading edge 58 of the locking element to slide into the top most part of the locking recess 64. At this point, the slot 56 returns to substantially its original shape thereby releasing most of the compression of the locking structure 44 caused by the engagement of the locking element 48 with the recess 46.

Referring to Figure 2, it is noted that the drive hub includes holes such as 70 that receive pin extensions such as 72 from a tool 74. The drive hub is preferably mounted on the tool 74 before insertion into the opening or cavity of the drive end plate. The locking tabs 54 are received in the matching cutouts such as 52 in the drive plate 20. The tool 74 provides sufficient leverage to easily rotate the locking elements of the drive hub into place within the drive end plate.

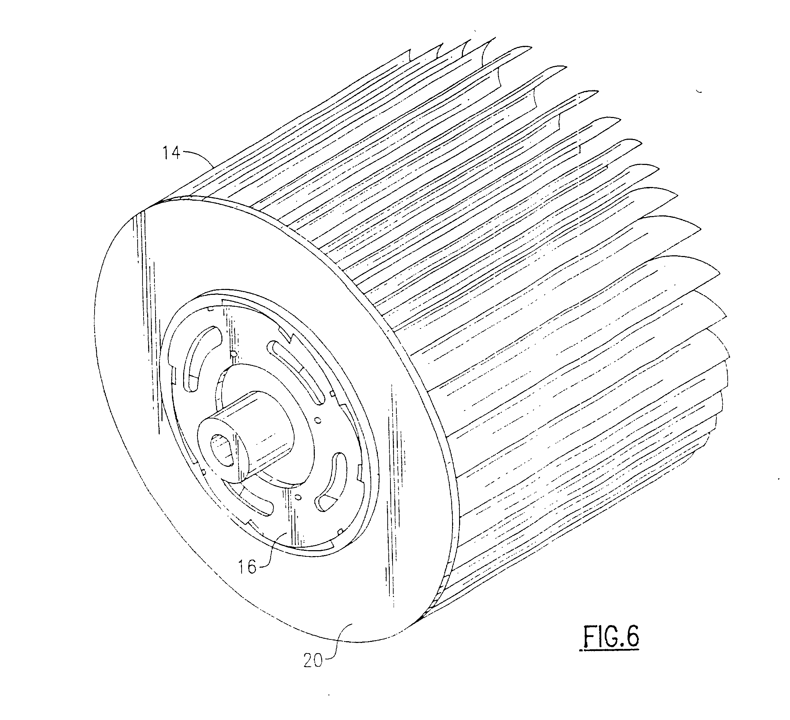

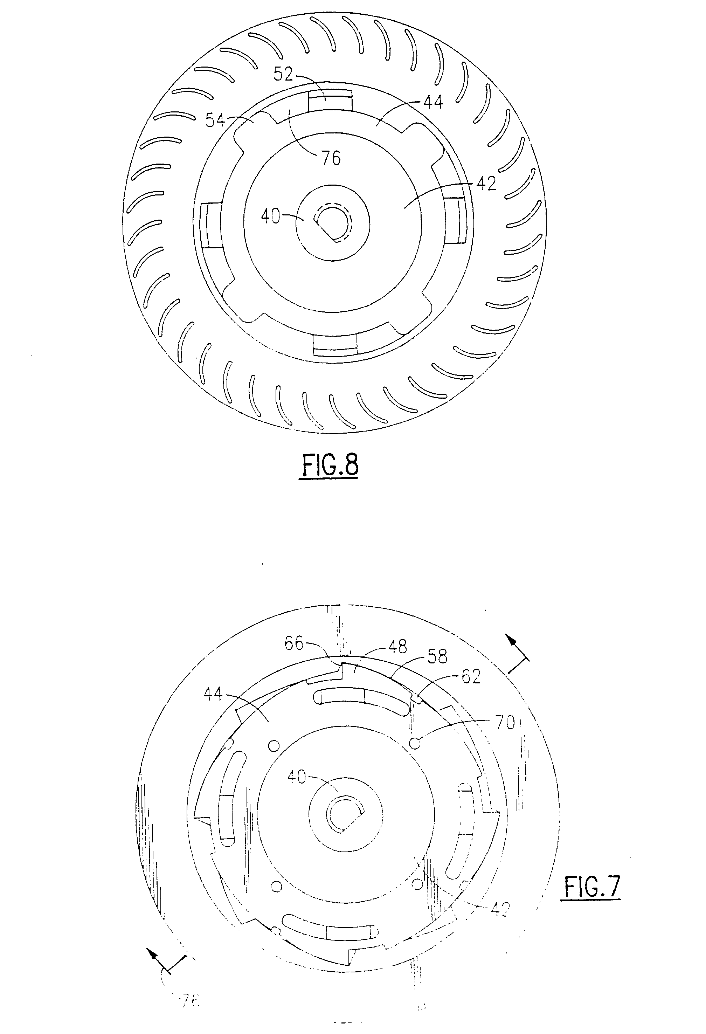

Referring to Figure 6, the drive hub 16 is illustrated in place within the drive end plate 20. The locking elements of the drive hub illustrated as being in place with respective locking recesses of the drive end plate. The final position of each locking element with respect to a corresponding locking recess is further illustrated in Figure 7, which is a front-end view of the drive hub within the drive end face. There are preferably four such locking elements and corresponding locking recesses. Each locking element includes a notch 62 defining a respective pivot point.

Referring to Figure 8, the back side of the drive hub 16 within the drive end plate 20 is illustrated. It is to be noted that the locking tabs such as 54 have been rotated from their respective entry points in the cutouts such as 52 along formed channels such as 76 in the back side of the drive end plate until reaching the end of such channels. The ends of these channels determine not just the final position of the locking tabs, but also the final position of the locking elements within their respective locking recesses. In this regard, the ends of these channels must be carefully defined relative to the inclined edges 66 of the locking recesses so that the edges 58 of the locking elements move into final position within the corresponding locking recesses.

Referring to Figure 9, a cross-sectional view of the drive hub within the drive end plate is shown along the line 76 of Figure 7. The thickness "t" of the diaphragm 42 is illustrated relative to the thickness "T" of the locking structure 44. The depth of the holes such as 70 within the locking structure are also shown. In a particular preferred embodiment, the thickness "T" of the locking structure is six millimeters with a tolerance of one-tenth of a millimeter. This allows sufficient rigidity to support the diaphragm 42 while still accommodating the amount of compression of the slot 56 that must occur during the locking action. The thickness "t" of the diaphragm must be thin enough so as to allow for any potential mild distortion of the diaphragm that may be needed. As has been previously discussed, such distortion may occur due to axial misalignment of the drive shaft of the motor at one end of the transverse fan assembly with respect to the bearing mount at the opposing end. The thickness "t" however must also be thick enough so as to oppose any sagging creep due to the weight of the transverse fan assembly. These two requirements of the thickness "t" are met in a particular preferred embodiment by a thickness "t" of one millimeter having a tolerance of five hundredths of a millimeter.

It is to be appreciated that a particular embodiment of the drive hub 16 has been described. Alterations, modifications and improvements thereto will readily occur to those skilled in the art Accordingly, the foregoing description is by way of example only and the invention is to be limited by the following claims and equivalents thereto.

## Claims

1. A drive hub (16) for engaging the drive end of a transverse fan assembly (14) comprising:
a sleeve (40) for connecting the drive hub (16) to a drive shaft (12) of an electric motor (10) ;
a locking structure (44) having a diameter substantially larger than the diameter of the sleeve (40) and furthermore having locking members (48) which interact with the drive end of the transverse fan assembly (14) so as to which interact with the drive end of the transverse fan assembly (14) so as to lock the drive hub (16) to the drive end of the transverse fan assembly (14); and
a diaphragm (42) positioned between said sleeve (40) and said locking structure (44), said diaphragm (42) having a substantially uniform thickness that is less than the thickness of the locking structure (44) allowing said diaphragm (42) to flex between the sleeve (40) and the locking structure (44).

2. The drive hub of claim 1 wherein each of said locking members (48) pivots about a definable point on said locking structure (44) so as to pivot downwardly toward the center of said drive hub (16) following initial engagement of said drive hub (16) with the drive end of the transverse fan assembly (14).

3. The drive hub of claim 2 wherein said locking structure (44) further comprises :
a plurality of slotted holes (56), each associated with a respective locking member (48), each slotted hole (56) having a portion thereof positioned below the said respective locking member (48) so as to define a space in which said locking member (48) can pivot downwardly into following initial engagement of said drive hub (16) with the drive end of else transverse fan assembly (14).

4. The drive hub of claim 3 wherein each of said locking members (48) further comprise:
a notch (62) located above one end of the slotted hole (56) associated with the particular locking member (48), so as to define the point about which the locking member (48) pivots.

5. The drive hub of claim 4 wherein each locking member (48) further comprises:
an upward extending portion which pivots about the point defined by the notch (62) located above one end of the slotted hole (56) associated with the particular locking member (48), and
a link (59) located above the slotted hole (56) associated with the locking member (48), said link (59) connecting the upwardly extending portion of the locking member (48) to said locking structure at an end of the slotted hole (56) opposite the end of the slotted hole beneath the notch (62).

6. The drive hub of either one of claims I and 5 wherein the drive hub (16) is molded as a single unit from a thermoplastic elastomer material.

7. The drive hub of claim 1 wherein the thickness of the diaphragm (42) is within the range of ninety-five hundredths of a millimeter to one-hundred five hundredths of a millimeter.

8. The drive hub of claim 1 further comprising :
a plurality of circular holes (70) in said locking structure (44) for receiving extensions of a tool (74), the tool being used to rotate the locking structure (44) of the drive hub (16) into locking engagement with the drive end of the transverse fan assembly (14).

9. A transverse fan assembly having a drive end and a drive hub (16) affixed to said drive end, said drive end including a cavity for receiving the drive hub wherein said drive hub comprises:
a sleeve (40) for connecting the drive hub (16) to a drive shaft (12) of an electric motor (10).
a locking structure (44) having an inner diameter substantially larger than the diameter of the sleeve (40) and furthermore having a plurality of locking members (48) located along the outer periphery of the locking structure (44) for engaging shaped recesses within the cavity of the drive end; and
a diaphragm (42) positioned between said sleeve (40) and said locking structure (44), said diaphragm (42) having a thickness that is less than the thickness of the locking structure (44) thereby allowing said diaphragm (42) to flex between the sleeve (40) and the locking structure (44).

10. The transverse fan assembly of claim 9 wherein the cavitv of the drive end comprises:
a plurality of first recesses (46) in the contour of the cavity for receiving each locking member (48) of the locking structure (44).

11. The transverse fan assembly of claim 10 wherein the cavity of the drive end further comprises:
a plurality of second recesses (64) in the contour of the cavity. each of said second recesses receiving a corresponding locking member (48) when said drive hub (16) is rotated within said cavity so as to move said locking members (48) from said plurality of first recesses (46) into said plurality of second recesses (64).

12. The transverse fan assembly of claim 11 wherein each locking member (48) is flexibly connected to a respective part of the locking structure (44) so as to flex downwardly toward the sleeve (40) of the drive hub (16) when said drive hub is rotated within said cavity so as to move the locking members (48) from said plurality of first recesses (46) into said plurality of second recesses (64).

13. The transverse fan assembly of claim 10 and 11
wherein the locking structure (44) of the drive hub (16) further comprises :
a plurality of slotted holes (56), each slotted hole located below a respective locking member (48) as to define a space for the downward deflection of the respective locking member (48) to move into as the drive hub (16) is rotated within the cavity of the drive end.

14. The transverse assembly of claim 13 wherein the locking structure (44) of the drive hub (16) further comprises:
a plurality of notches (62) in the periphery of the locking structure (44), each notch (62) associated with a particular locking member (48) and positioned above an end of a slotted hole (56) associated with the particular locking member (48) so as to define a pivoting point for the particular locking member (48) is the particular locking member is forced to move downwardly into the slotted hole (62) associated with the locking member.

15. The transverse fan assembly of claim 14 wherein each locking member further (48) comprises :
an upward extending portion which pivots about the point defined by the notch (62) located above one end of the slotted hole (56) associated with the particular locking members (48); and
a link (59) located the slotted hole (56) associated with the locking member (48), said link (59) connecting the upwardly extending portion of the locking member (48) to said locking structure (44) at an end of the slotted hole (56) opposite the end of the slotted hole beneath the notch (62).

16. The transverse fan assembly of either one of claims 9 and 15 wherein the drive hub (16) is molded as a unit from a thermoplastic elastomer material

17. The transverse fan assembly of clam 9 further comprising;
a plurality of circular holes (70) in said locking structure (44) for receiving extensions of a tool (74), the tool being used to rotate the locking elements (48) of the locking structure (44) between the plurality of first recesses (46) and the plurality of second recesses (64) the contour of the cavity of the drive end

## Patentansprüche

1. Antriebsnabe (16) zum Eingriff in das Antriebsende eines Querstromlüfter-Aufbaus (14), umfassend:
eine Buchse (40) zum Verbinden der Antriebsnabe (16) mit einer Antriebswelle (12) eines elektrischen Motors (10);
eine Verriegelungsstruktur (44) mit einem Durchmesser, welcher wesentlich größer ist als der Durchmesser der Buchse (40) und welcher ferner Verriegelungsglieder (48) aufweist, welche mit dem Antriebsende des Querstromlüfter-Aufbaus so zusammenwirken, dass die Antriebsnabe (16) an dem Antriebsende des Querstromlüfter-Aufbaus (14) verriegelt wird; und
eine Membran (42), welche zwischen der Buchse (40) und der Verriegelungsstruktur (44) angeordnet ist , wobei die Membran (42) eine im Wesentlichen einheitliche Dicke aufweist, welche geringer ist als die Dicke der Verriegelungsstruktur (44), was der Membran (42) ermöglicht, sich zwischen der Buchse (40) und der Verriegelungsstruktur (44) zu verbiegen.

2. Antriebsnabe gemäß Anspruch 1, wobei sich jedes der Verriegelungsglieder (48) so um einen definierbaren Punkt an der Verriegelungsstruktur (44) verschwenkt, dass es sich abwärts hin zu der Mitte der Antriebsnabe (16) verschwenkt anschließend an einen anfänglichen Eingriff der Antriebsnabe (16) mit dem Antriebsende des Querstromlüfter-Aufbaus (14).

3. Antriebsnabe gemäß Anspruch 2, wobei die Verriegelungsstruktur (44) ferner umfasst:
eine Mehrzahl von Schlitzlöchern (56), welche jedes einem jeweiligen Verriegelungsglied (48) zugeordnet ist, wobei jedes Schlitzloch (56) einen Bereich daran aufweist, welcher unterhalb des jeweiligen Verriegelungsgliedes (48) so angeordnet ist, dass er einen Zwischenraum definiert, in den hinein sich das Verriegelungsglied (48) abwärts verschwenken kann anschließend an einen anfänglichen Eingriff der Antriebsnabe (16) mit dem Antriebsende des Querstromlüfter-Aufbaus (14).

4. Antriebsnabe gemäß Anspruch 3, wobei jedes der Verriegelungsglieder (48) ferner umfasst:
eine Kerbe (62), welche oberhalb eines Endes des Schlitzloches (56), welches einem speziellen Verriegelungsglied (48) zugeordnet ist, angeordnet ist, um so den Punkt zu definieren, um den sich das Verriegelungsglied (48) schwenkt.

5. Antriebsnabe gemäß Anspruch 4, wobei jedes Verriegelungsglied (48) ferner umfasst:
einen sich nach oben erstreckenden Bereich, welcher sich um den Punkt schwenkt, der durch die Kerbe (62) definiert ist, welche oberhalb eines Endes des Schlitzloches (56), welches einem speziellen Verriegelungsglied (48) zugeordnet ist, angeordnet ist, und
eine Verbindung (59), welche oberhalb des dem Verriegelungsglied (48) zugeordneten Schlitzloches (56) angeordnet ist, wobei die Verbindung (59) den sich nach oben erstreckenden Bereich des Verriegelungsgliedes (48) mit der Verriegelungsstruktur an einem Ende des Schlitzloches (56) gegenüber dem Ende des Schlitzloches unterhalb der Kerbe (62) verbindet.

6. Antriebsnabe gemäß einem der vorhergehenden Ansprüche, wobei die Antriebsnabe (16) als eine einzelne Einheit aus einem thermoplastischen Elastomer-Material gebildet ist.

7. Antriebsnabe gemäß einem der vorhergehenden Ansprüche, wobei die Dicke der Membran (42) innerhalb eines Bereichs von 95 Hundertsteln eines Millimeters bis 105 Hundertsteln eines Millimeters liegt.

8. Antriebsnabe gemäß einem der vorhergehenden Ansprüche, ferner umfassend:
eine Mehrzahl kreisförmiger Löcher (70) in der Verriegelungsstruktur (44) zum Aufnehmen von Verlängerungen eines Werkzeuges (74), wobei das Werkzeug dazu eingesetzt wird, um die Verriegelungsstruktur (44) der Antriebsnabe (16) in verriegelnden Eingriff mit dem Antriebsende des Querstromlüfter-Aufbaus (14) zu verdrehen.

9. Querstromlüfter-Aufbau mit einem Antriebsende und einer Antriebsnabe (16), welche an dem Antriebsende angebracht ist, wobei das Antriebsende eine Aussparung (22) zum Aufnehmen der Antriebsnabe umfasst, wobei die Antriebsnabe umfasst:
eine Buchse (40) zum Verbinden der Antriebsnabe (16) mit einer Antriebswelle (12) eines elektrischen Motors (10);
eine Verriegelungsstruktur (44) mit einem Innendurchmesser, welcher wesentlich größer ist als der Durchmesser der Buchse (40) und welcher ferner eine Mehrzahl von Verriegelungsgliedern (48) aufweist, welche entlang der äusseren Peripherie der Verriegelungsstruktur (44) angeordnet sind, um in geformte Ausnehmungen innerhalb der Aussparung des Antriebsendes einzugreifen; und
eine Membran (42), welche zwischen der Buchse (40) und der Verriegelungsstruktur (44) angeordnet ist, wobei die Membran (42) eine Dicke aufweist, welche geringer ist als die Dicke der Verriegelungsstruktur (44), was der Membran (42) ermöglicht, sich zwischen der Buchse (40) und der Verriegelungsstruktur (44) zu verbiegen.

10. Querstromlüfter-Aufbau gemäß Anspruch 9, wobei die Aussparung (22) des Antriebsendes umfasst:
eine Mehrzahl erster Ausnehmungen (46) in der Kontur der Aussparung zum Aufnehmen jeden Verriegelungsgliedes (48) der Verriegelungsstruktur (44).

11. Querstromlüfter-Aufbau gemäß Anspruch 10, wobei die Aussparung (22) des Antriebsendes ferner umfasst:
eine Mehrzahl zweiter Ausnehmungen (64) in der Kontur der Aussparung, wobei jede der zweiten Ausnehmungen ein entsprechendes Verriegelungsglied (48) aufnimmt, wenn die Antriebsnabe (16) innerhalb der Aussparung so gedreht wird, dass die Verriegelungsglieder (48) von der Mehrzahl erster Ausnehmungen (46) in die Mehrzahl zweiter Ausnehmungen (64) bewegt werden.

12. Querstromlüfter-Aufbau gemäß Anspruch 11, wobei jedes Verriegelungsglied (48) flexibel mit einem jeweiligen Teil der Verriegelungsstruktur (44) so verbunden ist, dass es abwärts hin zu der Buchse (40) der Antriebsnabe (16) gebogen wird, wenn die Antriebsnabe innerhalb der Aussparung so gedreht wird, dass die Verriegelungsglieder (48) von der Mehrzahl erster Ausnehmungen (46) in die Mehrzahl zweiter Ausnehmungen (64) bewegt werden.

13. Querstromlüfter-Aufbau gemäß Anspruch 10 und 11 oder 10 und 12, wobei die Verriegelungsstruktur (44) der Antriebsnabe (16) ferner umfasst :
eine Mehrzahl von Schlitzlöchern (56), wobei jedes Schlitzloch unterhalb eines jeweiligen Verriegelungsgliedes (48) angeordnet ist, um einen Zwischenraum für die Abwärtsverbiegung des jeweiligen Verriegelungsgliedes (48) zu definieren, in den dieses sich bewegen kann, wenn die Antriebsnabe (16) innerhalb der Aussparung des Antriebsendes gedreht wird.

14. Querstromlüfter-Aufbau gemäß Anspruch 13, wobei die Verriegelungsstruktur (44) der Antriebsnabe (16 ferner umfasst:
eine Mehrzahl von Kerben (62) in der Peripherie der Verriegelungsstruktur (44), wobei jede Kerbe (62) einem speziellen Verriegelungsglied (48) zugeordnet ist und oberhalb eines Endes eines dem speziellen Verriegelungsglied (48) zugeordneten Schlitzloches (56) angeordnet ist, so dass es einen Schwenkpunkt für das spezielle Verriegelungsglied (48) definiert, wenn das spezielle Verriegelungsglied gezwungen wird, sich abwärts in das dem Verriegelungsglied zugeordnete Schlitzloch (62) zu bewegen.

15. Querstromlüfter-Aufbau gemäß Anspruch 14, wobei jedes Verriegelungsglied (48) ferner umfasst:
einen sich nach oben erstreckenden Bereich, welcher sich um den Punkt schwenkt, welcher durch die Kerbe (62) definiert ist, welche oberhalb eines Endes des dem speziellen Verriegelungsglied (48) zugeordneten Schlitzloches (56) angeordnet ist; und
eine Verbindung (59), welche oberhalb des dem Verriegelungsglied (48) zugeordneten Schlitzloches (56) angeordnet ist, wobei die Verbindung (59) den sich nach oben erstreckenden Bereich des Verriegelungsgliedes (48) mit der Verriegelungsstruktur (44) an einem Ende des Schlitzloches (56) gegenüber dem Ende des Schlitzloches unterhalb der Kerbe (62) verbindet.

16. Querstromlüfter-Aufbau gemäß einem der Ansprüche 9 bis 15, wobei die Antriebsnabe (16) als eine Einheit aus einem thermoplastischen Elastomer-Material gebildet ist.

17. Querstromlüfter-Aufbau gemäß einem der Ansprüche 9 bis 16, ferner umfassend:
eine Mehrzahl kreisförmiger Löcher (70) in der Verriegelungsstruktur (44) zum Aufnehmen von Verlängerungen eines Werkzeuges (74), wobei das Werkzeug dazu eingesetzt wird, um die Verriegelungselemente (48) der Verriegelungsstruktur (44) zwischen der Mehrzahl erster Ausnehmungen (46) und der Mehrzahl zweiter Ausnehmungen (64) in der Kontur der Aussparung des Antriebsendes zu drehen.

## Revendications

1. Moyeu entraîneur (16) pour engrener l'extrémité d'entraînement d'un ventilateur à tenant transversal (14) comprenant :
un manchon d'accouplement (40) pour raccorder le moyeu entraîneur (16) à un arbre d'entraînement (12) d'un moteur électrique ;
une structure d'enclenchement (44) ayant un diamètre sensiblement plus grand que le diamètre du manchon d'accouplement (40) et de plus ayant des membres d'enclenchement (48) qui interagissent avec l'extrémité d'entraînement du ventilateur à tenant transversal (14) afin de verrouiller le moyen entraîneur sur l'extrémité d'entraînement du ventilateur à tenant transversal ; et
un diaphragme (42) positionné entre ledit manchon d'accouplement (40) et ladite structure d'enclenchement (44), ledit diaphragme (42) ayant une épaisseur sensiblement uniforme qui est inférieure à l'épaisseur de la structure d'enclenchement (44) permettant au dit diaphragme (42) de fléchir entre le manchon d'accouplement (40) et la structure d'enclenchement (44).

2. Moyeu entraîneur selon la revendication 1, dans lequel chacun desdits membres d'enclenchement (48) pivote autour d'un point définissable sur ladite structure d'enclenchement (44) de façon à pivoter vers le bas vers le centre dudit moyeu entraîneur (16) suite à un engrènement initial dudit moyeu entraîneur (16) avec l'extrémité d'entraînement du ventilateur à tenant transversal (14).

3. Moyeu entraîneur selon la revendication 2, dans lequel ladite structure d'enclenchement (44) comprend en outre :
une pluralité d'orifices rainurés (56), chacun associé à un membre d'enclenchement respectif (48), chaque orifice rainuré (56) ayant une de ses parties positionnée en dessous dudit membre d'enclenchement respectif (48), de façon à définir un espace dans lequel ledit membre d'enclenchement (48) peut pivoter vers le bas dans l'engrènement initial suivant dudit moyeu entraîneur (16) avec l'extrémité d'entraînement du ventilateur à tenant transversal (14).

4. Moyeu entraîneur selon la revendication 3, dans lequel chacun desdits membres d'enclenchement (48) comprend en outre :
une entaille (62) située au-dessus d'une extrémité de l'orifice rainuré (56) associé au membre d'enclenchement particulier (48) de façon à définir le point autour duquel le membre d'enclenchement (48) pivote.

5. Moyeu entraîneur selon la revendication 4, dans lequel chaque membre d'enclenchement (48) comprend en outre :
une partie s'étendant vers le haut qui pivote autour du point défini par l'entaille (62) située au-dessus d'une extrémité de l'orifice rainuré (56) associé au membre d'enclenchement particulier (48) ; et
une liaison (59) située au-dessus de l'orifice rainuré (56) associé au membre d'enclenchement (48), ladite liaison (59) raccordant la partie s'étendant vers le haut du membre d'enclenchement (48) à ladite structure d'enclenchement à une extrémité de l'orifice rainuré (56) opposée à l'extrémité de l'orifice rainuré sous l'entaille (62).

6. Moyeu entraîneur selon l'une quelconque des revendications précécentes, dans lequel le moyen entraîneur (16) est moulé en tant que simple unité à partir d'un matériau en élastomère thermoplastique.

7. Moyeu entraîneur selon l'une quelconque des revendications précédentes, dans lequel l'épaisseur du diaphragme (42) se situe dans la gamme de quatre-vingt quinze centièmes de millimètre à cent cinq centièmes de millimètre.

8. Moyeu entraîneur selon l'une quelconque des revendications précédentes comprenant en outre :
une pluralité d'orifices circulaires (70) dans ladite structure d'enclenchement (44) pour recevoir les extensions d'un outil (74), l'outil étant utilisé pour faire tourner la structure d'enclenchement (44) du moyeu entraîneur (16) dans l'engrènement d'enclenchement avec l'extrémité d'entraînement du ventilateur à tenant transversal (14).

9. Ventilateur à tenant transversal ayant une extrémité d'entraînement et un moyeu entraîneur (16) fixés à ladite extrémité d'entraînement, ladite extrémité d'entraînement comprenant une cavité (22) pour recevoir le moyeu entraîneur dans lequel ledit moyeu entraîneur comprend :
un manchon d'accouplement (40) pour raccorder le moyeu entraîneur (16) à un arbre d'entraînement (12) d'un moteur électrique (10),
une structure d'enclenchement (44) ayant un diamètre intérieur sensiblement plus grand que le diamètre du manchon d'accouplement (40) et de plus ayant une pluralité de membres d'enclenchement (48) situés le long de la périphérie extérieure de la structure d'enclenchement (44) pour engrener les évidements formés à l'intérieur de la cavité de l'extrémité d'entraînement ; et
un diaphragme (42) positionné entre ledit manchon d'accouplement (40) et ladite structure d'enclenchement (44), ledit diaphragme (42) ayant une épaisseur qui est inférieure à l'épaisseur de la structure d'enclenchement (44), permettant par ce moyen au dit diaphragme (42) de fléchir entre le manchon d'accouplement (40) et la structure d'enclenchement (44).

10. Ventilateur à tenant transversal selon la revendication 9, dans lequel la cavité (22) de l'extrémité d'entraînement comprend :
une pluralité de premiers évidements (46) dans le contour de la cavité pour recevoir chaque membre d'enclenchement (48) de la structure d'enclenchement (44).

11. Ventilateur à tenant transversal selon la revendication 10, dans lequel la cavité (22) de l'extrémité d'entraînement comprend en outre :
une pluralité de seconds évidements (64) dans le contour de la cavité, chacun desdits seconds évidements recevant un membre d'enclenchement correspondant (48) lorsque ledit moyeu entraîneur (16) est tourné à l'intérieur de ladite cavité de façon à déplacer lesdits membres d'enclenchement (48) depuis ladite pluralité de premiers évidements (46) dans ladite pluralité de seconds évidements (64).

12. Ventilateur à tenant transversal selon la revendication 11, dans lequel chaque membre d'enclenchement (48) est raccordé de manière souple à une partie respective de la structure d'enclenchement (44) de façon à fléchir vers le bas vers le manchon d'accouplement (40) du moyeu entraîneur (16) lorsque ledit moyeu entraîneur est tourné à l'intérieur de ladite cavité de façon à déplacer les membres d'enclenchement (48) depuis ladite pluralité de premiers évidements (46) dans ladite pluralité de seconds évidements (64).

13. Ventilateur à tenant transversal selon la revendication 10 et 11 ou 10 et 12, dans lequel la structure d'enclenchement (44) du moyeu entraîneur (16) comprend en outre :
une pluralité d'orifices rainurés (56), chaque orifice rainuré étant situé en dessous d'un membre d'enclenchement respectif (48) de façon à définir un espace pour la déflexion vers le bas du membre d'enclenchement respectif (48) à déplacer dedans lorsque le moyeu entraîneur (16) est tourné à l'intérieur de la cavité de l'extrémité d'entraînement.

14. Ventilateur à tenant transversal selon la revendication 13, dans lequel la structure d'enclenchement (44) du moyeu entraîneur (16) comprend en outre :
une pluralité d'entailles (62) dans la périphérie de la structure d'enclenchement (44) ; chaque entaille (62) étant associée à un membre d'enclenchement particulier (48) et positionnée au-dessus d'une extrémité d'un orifice rainuré (56) associé au membre d'enclenchement particulier (48) de façon à définir un point de pivotement pour le membre d'enclenchement particulier (48) lorsque le membre d'enclenchement particulier est contraint de bouger vers le bas dans l'orifice rainuré (62) associé avec le membre d'enclenchement.

15. Ventilateur à tenant transversal selon la revendication 14, dans lequel chaque membre d'enclenchement (48) comprend en outre :
une partie s'étendant vers le haut qui pivote autour du point défini par l'entaille (62) située au-dessus d'une extrémité de l'orifice rainurée (56) associé au membre d'enclenchement particulier (48) ; et
une liaison (59) située au-dessus de l'orifice rainuré (56) associé au membre d'enclenchement particulier (48), ladite liaison (59) raccordant la partie s'étendant vers le haut du membre d'enclenchement (48) à ladite structure d'enclenchement (44) à une extrémité de l'orifice rainuré (56) face à l'extrémité de l'orifice rainuré sous l'entaille (62).

16. Ventilateur à tenant transversal selon l'une quelconque des revendications 9 à 15, dans lequel le moyeu entraîneur (16) est moulé en tant qu'unité à partir d'un matériau en élastomère thermoplastique.

17. Ventilateur à tenant transversal selon l'une quelconque des revendications 9 à 16 comprenant en outre :
une pluralité d'orifices circulaires (70) dans ladite structure d'enclenchement (44) pour recevoir les extensions d'un outil (74), l'outil étant utilisé pour faire tourner les éléments d'enclenchement (48) de la structure d'enclenchement (44) entre la pluralité de premiers évidements (46) et la pluralité de seconds évidements (64) dans le contour de la cavité de l'extrémité d'entraînement.
